# EUROPEAN PATENT SPECIFICATION

(11) **EP 2 399 741 B1**
(45) Date of publication and mention of the grant of the patent: **24.12.2014**
(21) Application number: 09840260.5
(22) Date of filing: 10.07.2009
(51) Int. Cl.: B32B 27/40, C08J 7/04, D21H 19/82, C09D 175/04

(54) **USE OF A FILM FOR THE LAMINATION OF PRINTED MATTER AND PRODUCTION METHOD OF SUCH FILM**
VERWENDUNG EINER FOLIE ZUM LAMINIEREN VON BEDRUCKTEM MATERIAL UND HERSTELLUNGSVERFAHREN FÜR EINEN DERARTIGEN FILM
UTILISATION D'UN FILM POUR LAMINAGE D'IMPRIMÉS ET PROCÉDÉ DE FABRICATION D'UN TEL FILM

(30) Priority: 19.02.2009 ES 200900469
(43) Date of publication of application: 28.12.2011
(73) Proprietor: Taghleef Industries S.L., 23680 Alcalá La Real-Jaén (ES)
(72) Inventor: DEL BARRIO PÉREZ, Javier, E-23680 Alcalá La Real-Jaén (ES); LOPEZ QUESADA, Manuel, E-23680 Alcalá La Real-Jaén (ES)
(74) Representative: Elzaburu Marquez, Alberto
(86) International application number: PCT/ES2009/070282
(87) International publication number: WO 2010/094816

(56) References cited:
- WO-A1-2006/097318
- GB-A- 1 218 042
- GB-A- 1 218 042
- US-A- 5 952 106
- US-A1- 2003 157 277
- US-A1- 2004 143 056
- "Kunststoff Handbuch - Polyurethane", 1983, Becker / Braun, München ISBN: 3-446-13614-2 vol. 7, page 571,
- LICHANG ZHOU, BERNARD KOLTISKO: "Development of Soft Feel Coatings with Waterborne Polyurethanes", JCT COATINGS TECH, vol. 2, 1 April 2005 (2005-04-01), pages 54-60, XP009177495, ISSN: 1547-0083

## Description

### Object of the Invention

The instant invention discloses the use of a film having a matte finish for lamination of printed matter according to claim 1 which provides several competitive advantages with respect of the films traditionally applied in this sector.

The application of this product is the market of lamination, among these, lamination of book covers, cartons, boxes, bags, posters, impermeable corrugated cardboard, gift wrapping paper, catalogues, printing jobs and printed matter in general.

### Background of the Invention

The lamination of graphic supports for matte finishes is currently made employing films that are manufactured by the coextrusion method, in which the matte face is shaped by means of a coextrusion by the incorporation of a polyolefin that is incompatible with the substrate base. Coextrusion is the simultaneous extrusion through a die of two or more polyolefins to form a multi-layered structure. Whether dealing with the procedure of blown films, cast films, laminas or profiles, the coextrusion system needs to distribute the coextruded output guaranteeing a uniform distribution of its thickness, minimizing the distortions in the interface between the different levels and foreseeing problems of interfacial instability.

Coextrusion enables the combination of polymers that possess different properties so as to ensure a more economical and functional packing. However, current matte films manufactured by extrusion and employed in the lamination of supports display certain deficiencies such as, for example, a relatively low resistance to scratching and a certain tendency to deteriorate or skew the tonalities of the colors of the graphic support.

### Description of the Invention

The film object of the invention is configured by a substrate or nucleus of plastic film manufactured by extrusion with thicknesses comprising between 10 and 40 µm. To this is added by coating a liquid dispersion of aliphatic polyurethane base having a milky white appearance, which contains between 30% and 100% solids depending on the degree of soft touch required, and preferably between 70% and 95%. The thickness of said coating, when dry, is comprised of between 0.2 and 5 µm and preferably between 1 and 3 µm.

Said dispersion of aliphatic polyurethane incorporates in its composition a specific primer for plastic laminas, preferably a urethane aliphatic dispersion which has as its purpose to improve the adherence of the plastic substrate and / or hardness of the film for lamination.

Furthermore, the aliphatic polyurethane dispersion incorporates into its composition a hardener of a type of polymer chains with crosslinkers and / or other plastic resins that act as binders, comprising between 0 and 70% in weight, and which function as a base and support of the polyurethane resin and make it possible to obtain desired degree of soft touch and matte.

The film obtained in this way can be a dry finish, in which case a self-adhesive laminated resin is used on the non-matte face, that could be polyethylene (PE), ethyl vinyl acetate (EVA), ethylene butyl acrylate (EBA), ethylene methyl acrylate (EMA) and / or ethylene ethyl acrylate (EEA). These enable the adhesion to the graphic support by means of heat application. The film can also be manufactured with a wet finish, in which case no self-adhesive resin whatsoever is applied on the non-matte face, rather the surface of said face is modified by a corona or chemical treatment, and thus is prepared for the application of adhesives and glues during the lamination process.

This kind of matte film for lamination of graphic support is manufactured by extrusion of one substrate or nucleus of plastic film, to which is added a liquid dispersion coating of aliphatic polyurethane base having a milky white appearance. Besides surmounting the drawbacks of traditional films, this kind of film provides other important features and improvements that make it unique and significantly distinguishable from the rest of matte films that currently exist in the market. The main advantages and differentiating features of this film, especially in reference to its matte face, are the following:
- Good anti-scratch effects.
- A soft touch, that is to say, a very enjoyable peach skin effect to the touch, and the elimination of the "plastic" effect of traditional films.
- Depending on the percentage of polyurethane applied in the mixture, a shine value of less than 5%, measured at 60° (ASTM D2457-90) can be obtained. The result of this value is that it results practically in a complete lack of reflection in comparison with traditional matte films manufactured by extrusion, the shine range of which is between 8% and 12%.
- A high transparency by contact. There is practically no loss of tonality of the graphic support. Traditional matte films produce a whitish film on account of the type of matting agent that causes a loss of tonality of the colors it covers.

### Description of the Drawings

To complete the description that is being provided and for the purpose of facilitating the understanding of the features of the invention, the instant document is accompanied by a set of figures in which, for illustrative purposes and not limiting, the following is depicted:
Figure 1 shows a transversal section of a film for the lamination of graphic supports, provided with a dry finish.
Figure 2 shows a transversal section of a film for the lamination of graphic supports, provided with a wet finish.

### Preferred Embodiment of the Invention

As can be seen in the referenced figures, the film for lamination of graphic supports comprises a substrate or nucleus of plastic film (1) manufactured by extrusion thicknesses comprising between 10 and 40 µm, to which is added by coating a liquid dispersion of aliphatic polyurethane base (2) having a milky white appearance, which could contain other chemical products such as other plastic resins (binders), hardeners (crosslinkers) and / or adhesives (primers) for the purpose of obtaining the desired degree of hardness, adherence and soft touch.

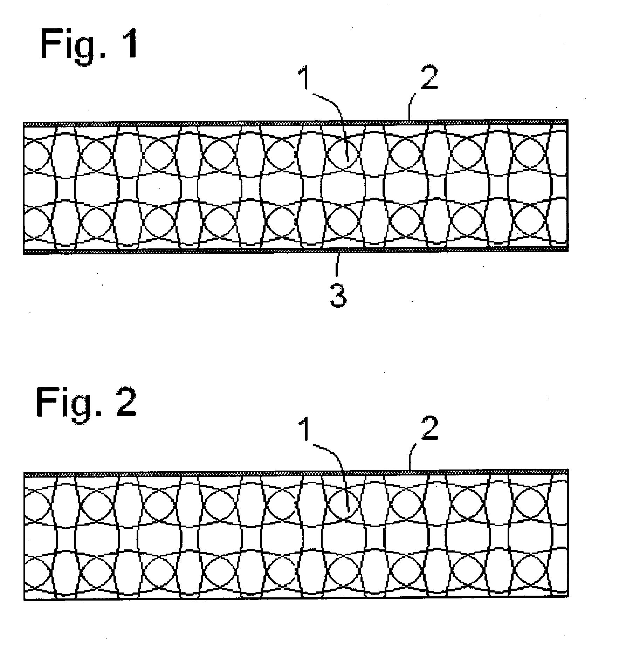

As can be seen in Figure 1, a self - adhesive resin (3) has been applied to the non-matte face. This adhesive resin could be polyethylene (PE), ethyl vinyl acetate (EVA), ethylene butyl acrylate (EBA), ethylene methyl acrylate (EMA) and / or ethylene ethyl acrylate (EEA), that is attached to the support by means of adhesion and heat application, thus providing it a dry finish.

Figure 2 shows a film with a wet finish, which is obtained by applying a corona or chemical treatment to the non-matte face, leaving it prepared for the application of adhesives and glues, without applying in this case any self-adhesive resin whatsoever on the surface of said face.

Having sufficiently described the nature of the invention, as well as an example of the preferred embodiment, it is hereby stated for the appropriate purposes, that the materials, shape, size and disposition of the described elements could be modified, as long as any modification does not imply an alteration of the essential features of the invention, which are claimed as follows:

## Claims

1. A use of a film comprising a substrate of plastic film (1) manufactured by extrusion with a thickness comprising between 10 and 40 µm to which is added by coating a liquid base dispersion of aliphatic polyurethane (2), which contains between 30% and 100% solids depending on the degree of soft touch required, the thickness of said coating, when dry, being comprised between 0.2 and 5 µm, in the lamination of printed matter.

2. The use of a film according to claim 1, wherein the thickness of the coating, when dry, is comprised between 1 and 3 µm.

3. The use of a film according to any one of the previous claims, wherein the content of solids is between 70% and 95% depending on the degree of soft touch required.

4. The use of a film according to any one of the previous claims, wherein the liquid base dispersion further comprises a urethane aliphatic dispersion as a primer specific for plastic laminas.

5. The use of a film according to any one of previous claims, wherein the liquid base dispersion further comprises a hardener of a type of polymer chains with crosslinkers and/or other plastic resins that act as binders, comprising between 0 and 70% in weight.

6. The use of a film according to any one of the previous claims, wherein a self-adhesive resin (3) based on polyethylene (PE), ethyl vinyl acetate (EVA), ethylene butyl acrylate (EBA), ethylene methyl acrylate (EMA) and / or ethylene ethyl acrylate (EEA) is applied on the face of the film opposed to the coating, for its attachment to the printed matter by means of adhesion by heat application in such a manner that a dry finish is obtained.

7. The use of a film according to any one of previous claims 1-5, wherein a corona or chemical treatment is applied on the face of the film opposed to the coating, leaving said face prepared for the application of adhesives and glues for its attachment to the printed matter in such a manner that a wet finish is obtained.

8. A method for manufacturing a film for the lamination of printed matter, the method comprising the steps of:
a) providing a plastic film (1) manufactured by extrusion with a thickness comprising between 10 and 40 µm, and
b) adding to the plastic film (1) by coating a liquid base dispersion of aliphatic polyurethane (2), which contains between 30% and 100% solids depending on the degree of soft touch required, the thickness of said coating, when dry, being comprised between 0.2 and 5 µm.

9. The method according to previous claim 8, wherein the thickness of the coating to the plastic film, when dry, is comprised between 1 and 3 µm.

10. The method according to any one of previous claims 8-9, wherein the content of solids of the liquid base dispersion is between 70% and 95% depending on the degree of soft touch required.

11. The method according to any one of previous claims 8-10, wherein a urethane aliphatic dispersion is added to the liquid base dispersion.

12. The method according to any one of previous claims 8-11, wherein a hardener of the type of polymer chains with crosslinkers and/or other plastic resins that act as binders, comprising between 0 and 70% in weight, is added to the liquid base dispersion.

13. The method according to any one of previous claims 8-12 wherein, when a dry finish is desired, a self-adhesive laminated resin (3) based on polyethylene (PE), ethyl vinyl acetate (EVA), ethylene butyl acrylate (EBA), ethylene methyl acrylate (EMA) and/or ethylene ethyl acrylate (EEA) is applied on the face of the film opposed to the coating.

14. The method according to any one of previous claims 8-12 wherein, when a wet finish is desired, the face of the film opposed to the coating is subjected to a corona or chemical treatment, thus leaving said face prepared for the application of adhesives and glues without applying any self-adhesive resin on the surface of said face.

## Patentansprüche

1. Eine Verwendung einer Folie zur Kaschierung von Druckerzeugnissen, die ein Substrat aus Kunststofffolie (1) umfasst, das mittels Extrusion mit einer Stärke zwischen 10 und 40 µm gefertigt wird, zu dem eine aliphatische Polyurethan-Dispersion auf Flüssigkeitsbasis (2) mittels Beschichtung hinzugefügt wird, die abhängig vom erforderlichen Grad an weicher Haptik zwischen 30 % und 100 % an Feststoffen enthält, wobei die Stärke dieser Beschichtung im trockenen Zustand zwischen 0,2 und 5 µm beträgt.

2. Die Verwendung einer Folie nach Anspruch 1, bei der die Stärke der Beschichtung im trockenen Zustand zwischen 1 und 3 µm beträgt.

3. Die Verwendung einer Folie nach einem der vorstehenden Ansprüche, bei welcher der Feststoffgehalt abhängig vom erforderlichen Grad an weicher Haptik zwischen 70 % und 95 % beträgt.

4. Die Verwendung einer Folie nach einem der vorstehenden Ansprüche, bei der die Dispersion auf Flüssigkeitsbasis weiterhin eine aliphatische Urethan-Dispersion als eine für Kunststoffschichten spezifische Grundierung umfasst.

5. Die Verwendung einer Folie nach einem der vorstehenden Ansprüche, bei der die Dispersion auf Flüssigkeitsbasis weiterhin einen Härter vom Typ einer Polymerkette mit Quervernetzern und/oder andere Kunststoffharze umfasst, die als Bindemittel wirken und zwischen 0 und 70 Gewichtsprozent ausmachen.

6. Die Verwendung einer Folie nach einem der vorstehenden Ansprüche, bei der ein selbsthaftendes Harz (3), das auf Polyethylen (PE), Ethyl-Vinyl-Acetat (EVA), Ethylen/Butylacrylat (EBA), Ethylen/Methylacrylat (EMA) und/oder Ethylen/Ethylacrylat (EEA) basiert, auf die der Beschichtung gegenüberliegende Folienseite aufgebracht wird, um diese mittels Haftung durch Wärmeaufbringung an dem Druckerzeugnis zu befestigen, sodass eine trockene Endoberfläche erhalten wird.

7. Die Verwendung einer Folie nach einem der vorstehenden Ansprüche 1-5, bei der eine Corona- oder chemische Behandlung auf die der Beschichtung gegenüberliegende Folienseite aufgebracht wird, wodurch diese Seite für die Aufbringung von Haftmitteln und Klebstoffen zur Befestigung derselben an dem Druckerzeugnis vorbereitet wird, sodass eine trockene Endoberfläche erhalten wird.

8. Ein Verfahren zur Herstellung einer Folie zur Kaschierung von Druckerzeugnissen, wobei das Verfahren die folgenden Schritte umfasst:
a) die Bereitstellung einer Kunststofffolie (1), die mittels Extrusion mit einer Stärke zwischen 10 und 40 µm gefertigt wird, und
b) die Hinzufügung einer aliphatischen Polyurethan-Dispersion auf Flüssigkeitsbasis (2) mittels Beschichtung zu der Kunststofffolie (1), die abhängig vom erforderlichen Grad an weicher Haptik zwischen 30 % und 100 % an Feststoffen enthält, wobei die Stärke dieser Beschichtung im trockenen Zustand zwischen 0,2 und 5 µm beträgt.

9. Das Verfahren nach dem vorstehenden Anspruch 8, bei dem die Stärke der Beschichtung im trockenen Zustand zwischen 1 und 3 µm beträgt.

10. Das Verfahren nach einem der vorstehenden Ansprüche 8-9, bei dem der Feststoffgehalt der Dispersion auf Flüssigkeitsbasis abhängig vom erforderlichen Grad an weicher Haptik zwischen 70 % und 95 % beträgt.

11. Das Verfahren nach einem der vorstehenden Ansprüche 8-10, bei dem eine aliphatische Urethan-Dispersion zur Dispersion auf Flüssigkeitsbasis hinzugefügt wird.

12. Das Verfahren nach einem der vorstehenden Ansprüche 8-11, bei dem ein Härter vom Typ einer Polymerkette mit Quervernetzern und/oder andere Kunststoffharze, die als Bindemittel wirken und zwischen 0 und 70 Gewichtsprozent ausmachen, zur Dispersion auf Flüssigkeitsbasis hinzugefügt werden.

13. Das Verfahren nach einem der vorstehenden Ansprüche 8-12, bei dem, wenn eine trockene Endoberfläche gewünscht wird, ein selbsthaftendes Laminierharz (3), das auf Polyethylen (PE), Ethyl-Vinyl-Acetat (EVA), Ethylen/Butylacrylat (EBA), Ethylen/Methylacrylat (EMA) und/oder Ethylen/Ethylacrylat (EEA) basiert, auf die der Beschichtung gegenüberliegende Folienseite aufgebracht wird.

14. Das Verfahren nach einem der vorstehenden Ansprüche 8-12, bei dem, wenn eine trockene Endoberfläche gewünscht wird, die der Beschichtung gegenüberliegende Folienseite einer Corona- oder chemische Behandlung unterzogen wird, sodass diese Seite für die Aufbringung von Haftmitteln und Klebstoffen zur Befestigung vorbereitet wird, ohne dass ein selbsthaftendes Harz auf die Oberfläche dieser Seite aufgebracht wird.

## Revendications

1. Une utilisation d'un film comprenant un substrat de film plastique (1) fabriqué par extrusion d'une épaisseur comprise entre 10 et 40 µm auquel est ajoutée par revêtement une dispersion de base liquide de polyuréthane aliphatique (2), qui contient entre 30% et 100% de solides en fonction du degré de douceur au toucher requis, l'épaisseur dudit revêtement, lorsqu'il est sec, étant comprise entre 0,2 et 5 µm, dans le complexage d'imprimés.

2. L'utilisation d'un film selon la revendication 1, dans laquelle l'épaisseur du revêtement, lorsqu'il est sec, est comprise entre 1 et 3 µm.

3. L'utilisation d'un film selon n'importe laquelle des revendications précédentes, dans laquelle la teneur en solides est comprise entre 70% et 95% en fonction du degré de douceur au toucher requis.

4. L'utilisation d'un film selon n'importe laquelle des revendications précédentes, dans laquelle la dispersion de base liquide comprend en outre une dispersion d'uréthane aliphatique en tant qu'apprêt spécifique pour les feuilles de plastique.

5. L'utilisation d'un film selon n'importe laquelle des revendications précédentes, dans laquelle la dispersion de base liquide comprend en outre un durcisseur d'un type de chaînes polymères avec agents de réticulation et/ou d'autres résines plastiques qui agissent en tant que liants, étant compris entre 0 et 70% en poids.

6. L'utilisation d'un film selon n'importe laquelle des revendications précédentes, dans laquelle une résine auto-adhésive (3) à base de polyéthylène (PE), éthyle acétate de vinyle (EVA), éthylène acrylate de butyle (EBA), éthylène acrylate de méthyle (EMA) et/ou éthylène acrylate d'éthyle (EEA) est appliquée sur la face du film opposée au revêtement, pour sa fixation à l'imprimé par adhérence par application de chaleur de façon à obtenir un fini sec.

7. L'utilisation d'un film selon n'importe laquelle des revendications 1-5 précédentes, dans laquelle un effet couronne ou un traitement chimique est appliqué sur la face du film opposée au revêtement, pour laisser ladite face prête à l'application d'adhésifs et de colles pour sa fixation à l'imprimé de façon à obtenir un fini humide.

8. Un procédé de fabrication d'un film pour le complexage d'imprimés, le procédé comprenant les étapes consistant à :
a) fournir un film plastique (1) fabriqué par extrusion d'une épaisseur comprise entre 10 et 40 µm, et
b) ajouter au film plastique (1) par revêtement une dispersion de base liquide de polyuréthane aliphatique (2), qui contient entre 30% et 100% de solides en fonction du degré de douceur au toucher requis, l'épaisseur dudit revêtement, lorsqu'il est sec, étant comprise entre 0,2 et 5 µm.

9. Le procédé selon la revendication 8 précédente, dans lequel l'épaisseur du revêtement du film plastique, lorsqu'il est sec, est comprise entre 1 et 3 µm.

10. Le procédé selon n'importe laquelle des revendications 8-9 précédentes, dans lequel la teneur en solides de la dispersion de base liquide est comprise entre 70% et 95% en fonction du degré de douceur au toucher requis.

11. Le procédé selon n'importe laquelle des revendications 8-10 précédentes, dans lequel une dispersion d'uréthane aliphatique est ajoutée à la dispersion de base liquide.

12. Le procédé selon n'importe laquelle des revendications 8-11 précédentes, dans lequel un durcisseur du type de chaînes polymères avec agents de réticulation et/ou d'autres résines plastiques qui agissent en tant que liants, étant compris entre 0 et 70% en poids, est ajouté à la dispersion de base liquide.

13. Le procédé selon n'importe laquelle des revendications 8-12 précédentes dans lequel, lorsqu'un fini sec est souhaité, une résine auto-adhésive de complexage (3) à base de polyéthylène (PE), éthyle acétate de vinyle (EVA), éthylène acrylate de butyle (EBA), éthylène acrylate de méthyle (EMA) et/ou éthylène acrylate d'éthyle (EEA) est appliquée sur la face du film opposée au revêtement.

14. Le procédé selon n'importe laquelle des revendications 8-12 précédentes dans lequel, lorsqu'un fini humide est souhaité, la face du film opposée au revêtement est soumise à un effet couronne ou à un traitement chimique, pour, de cette manière, laisser ladite face prête à l'application d'adhésifs et de colles sans appliquer aucune résine auto-adhésive sur la surface de ladite face.
